(19) Europäisches Patentamt
European Patent Office
Office européen des brevets

(11) **EP 3 695 503 B1**

(12) **FASCICULE DE BREVET EUROPEEN**

(45) Date de publication et mention
de la délivrance du brevet:
**01.12.2021 Bulletin 2021/48**

(21) Numéro de dépôt: **18780128.7**

(22) Date de dépôt: **04.10.2018**

(51) Int Cl.:
*H02M 7/5387* (2007.01)    *H02M 1/12* (2006.01)
*H02J 7/06* (2006.01)

(86) Numéro de dépôt international:
**PCT/EP2018/077021**

(87) Numéro de publication internationale:
**WO 2019/072682 (18.04.2019 Gazette 2019/16)**

(54) **DISPOSITIF DE CHARGE D'UNE BATTERIE D'ACCUMULATION ELECTRIQUE**

VERFAHREN ZUM LADEN EINER ELEKTRISCHEN AKKUMULATORBATTERIE

METHOD FOR CHARGING AN ELECTRICAL ACCUMULATOR BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.10.2017 FR 1759615**

(43) Date de publication de la demande:
**19.08.2020 Bulletin 2020/34**

(73) Titulaire: **Renault s.a.s
92100 Boulogne-Billancourt (FR)**

(72) Inventeurs:
• **KVIESKA, Pedro
91370 Verrières le buisson (FR)**
• **GHITA, Ion
75002 Paris (FR)**
• **GODOY, Emmanuel
78000 Versailles (FR)**
• **BEAUVOIS, Dominique
91570 Bievres (FR)**

(56) Documents cités:
**WO-A1-2012/140374    US-A1- 2014 268 959**

• **J.LIU, S.LAGHROUCHE: "Observer based high
order siding mode control of power factor in three
phase AC/DC converter for hybrid electric vehicle
applications", INTERNATIONAL JOURNAL OF
CONTROL, vol. 87, no. 6, 1 janvier 2014
(2014-01-01), pages 1117-1130, XP002781477,
DOI: 10.1080/00207179.2013.868609**
• **SOSA JOSE M ET AL: "A model-based controller
for a DC-DC boost converter with an LCL input
filter", IECON 2015 - 41ST ANNUAL
CONFERENCE OF THE IEEE INDUSTRIAL
ELECTRONICS SOCIETY, IEEE, 9 novembre 2015
(2015-11-09), pages 619-624, XP032855333, DOI:
10.1109/IECON.2015.7392168**

**Description**

La présente invention concerne un dispositif de charge et un procédé de pilotage d'un tel dispositif, en particulier destiné à être utilisé dans un véhicule automobile à propulsion électrique ou hybride électrique.

Dans des véhicules à propulsion électrique ou hybride électrique, un groupe motopropulseur comporte une machine électrique alimentée par une batterie d'accumulation électrique. Dans certains de ces véhicules, il est prévu un dispositif de charge pouvant être raccordé au réseau électrique afin de recharger la batterie d'accumulation électrique entre deux utilisations du véhicule.

En vue de recharger la batterie d'accumulation électrique de son véhicule, un utilisateur peut souhaiter raccorder le dispositif de charge à un réseau électrique triphasé ou à un réseau électrique monophasé. À cet effet, il a été proposé des dispositifs de charge pouvant être raccordés à la fois au réseau triphasé et au réseau monophasé. Le document WO 2012/140 374 donne un exemple d'un tel dispositif de charge destiné à être utilisé dans un véhicule à propulsion électrique.

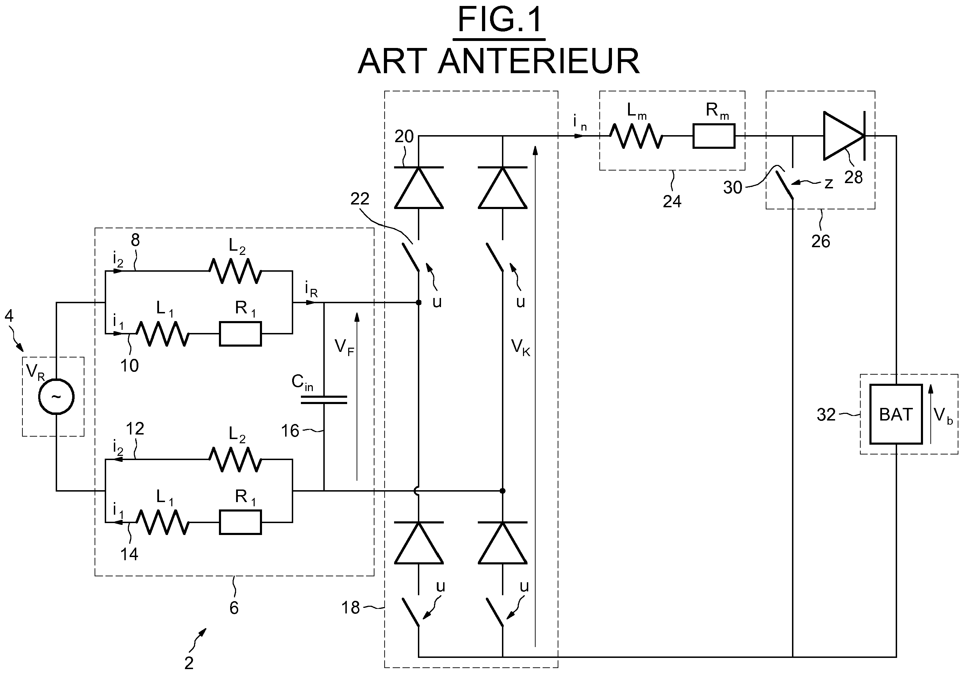

Sur la figure 1, on a représenté un schéma électrique simplifié d'un dispositif de charge 2 du type du document WO 2012/140 374. Le dispositif 2 est raccordé à un réseau électrique 4 monophasé de tension $V_R$ et d'intensité $i_R$.

Le dispositif 2 comporte un étage de filtrage 6. L'étage 6 est raccordé au réseau 4. L'étage 6 comprend une première branche 8, une deuxième branche 10, une troisième branche 12 et une quatrième branche 14. Les branches 10 et 14 comportent une inductance $L_1$ et une résistance $R_1$ et sont parcourues par un courant d'intensité $i_1$. Les branches 8 et 12 comportent une inductance $L_2$ et sont traversées par un courant d'intensité $i_2$. L'étage 6 comporte une cinquième branche 16 comprenant un condensateur de capacité $C_{in}$. La tension de sortie de l'étage 6, c'est-à-dire la tension aux bornes du condensateur de la branche 16, est $V_F$.

Le dispositif 2 comporte un étage abaisseur de tension 18. Sur ce schéma simplifié, l'étage 18 comporte quatre diodes 20 et quatre interrupteurs 22 répartis sur deux branches raccordées à l'étage 6. Les interrupteurs 22 sont pilotés par une fonction de pilotage u. L'étage 18 délivre en sortie une tension $V_k$ et un courant redressé d'intensité $I_n$.

L'étage 18 est raccordé à une inductance en série avec les inductances de la machine électrique du véhicule. Toutes ces inductances 24 sont schématiquement représentées par une inductance équivalente $L_m$ et une résistance équivalente $R_m$.

Le dispositif 2 comporte un étage élévateur de tension 26. L'étage 26 est raccordé à l'étage 18 en série avec la machine électrique 24. Dans le schéma simplifié de la figure 1, l'étage 26 comporte une diode 28 et un interrupteur 30. L'interrupteur 30 est piloté par une fonction de pilotage z.

Sur la figure 1, on a schématiquement représenté une batterie d'accumulation électrique 32. La batterie 32 est raccordée au dispositif de charge 2 en sortie de l'étage 18. La tension aux bornes de la batterie 32 est $V_b$.

Bien qu'un tel dispositif de charge apporte généralement satisfaction, certains inconvénients apparaissent notamment lorsqu'il est raccordé à un réseau électrique monophasé.

En particulier, lorsque le dispositif de charge est raccordé à un réseau électrique monophasé, il n'est pas réalisé de contrôle en boucle fermée du courant $i_R$. Il en résulte un manque de robustesse par rapport aux variations de la tension $V_R$.

En outre, le déphasage entre le courant $i_R$ et la tension $V_R$ n'est pas asservi. Il peut en résulter l'allongement du temps de charge.

Par ailleurs, la commande du dispositif de charge est fondée sur une estimation de la tension $V_k$ en boucle ouverte. Des erreurs de modélisation et des bruits de mesure peuvent biaiser cette estimation de sorte à accroître l'effet des inconvénients précités.

Au vu de ce qui précède, l'invention a pour but de permettre la charge d'une batterie d'accumulation électrique avec de l'énergie d'un réseau triphasé ou monophasé en palliant les inconvénients précités.

Plus particulièrement, avec un réseau monophasé, l'invention a pour but de maîtriser simultanément l'intensité du courant du réseau et l'intensité du courant redressé afin d'augmenter la robustesse de l'intensité de courant du réseau par rapport aux variations de la tension du réseau, de rendre plus facile la mise en conformité de l'intensité de courant du réseau aux exigences du distributeur, et d'éviter l'augmentation du temps de charge.

À cet effet, il est proposé un dispositif de charge d'une batterie d'accumulation électrique comprenant un étage de filtrage destiné à être raccordé au réseau électrique, un étage abaisseur de tension raccordé à l'étage de filtrage et un étage élévateur de tension couplé à l'étage abaisseur de tension et destiné à être raccordé à une batterie d'accumulation électrique, ledit dispositif de charge comprenant un système de pilotage d'au moins l'un des étages du dispositif de charge.

Selon une de ses caractéristiques générales, le système de pilotage comprend un observateur d'état d'au moins deux variables d'état, lesdites variables d'état comprenant une tension de sortie de l'étage de filtrage et une intensité de courant redressé.

Le système de pilotage combiné à un observateur d'état permet de mettre en œuvre un pilotage unique de l'intensité de courant du réseau et de l'intensité de courant redressé. Un tel observateur d'état est également avantageux en ce qu'il permet de piloter le dispositif de charge sans incorporer un nouveau capteur, en particulier pour mesurer la tension en sortie de l'étage abaisseur de tension.

Dans un mode de réalisation, l'étage de filtrage comprend une première branche et une deuxième branche, ledit observateur d'état étant apte à déterminer au moins une variable d'état supplémentaire choisie parmi une intensité de courant circulant dans la première branche, une intensité de courant circulant dans la deuxième branche et une intensité du réseau.

On peut en outre prévoir un bloc de commande en mode glissant comprenant des moyens pour recevoir une valeur et un signe d'une erreur associée à au moins l'une desdites variables d'état déterminées, une valeur mesurée de la tension du réseau et une valeur mesurée de la tension aux bornes de la batterie.

Le bloc de commande en mode glissant permet de mettre en œuvre un asservissement de ladite variable d'état par rapport à une consigne prédéterminée en limitant le temps de réponse et en permettant le réglage de la précision et de la stabilité par le choix des paramètres du bloc de commande.

Dans un mode de réalisation, au moins un étage parmi l'étage abaisseur de tension et l'étage élévateur de tension est contrôlé par une fonction de rapport cyclique, ledit dispositif comprenant un bloc d'asservissement d'au moins l'une desdites variables d'état déterminées, le bloc d'asservissement étant apte à déterminer une fonction de rapport cyclique corrigée.

Selon un autre aspect, il est proposé un procédé de pilotage d'un dispositif de charge de batterie d'accumulation électrique doté d'un étage de filtrage destiné à être raccordé au réseau électrique, d'un étage abaisseur de tension raccordé à l'étage de filtrage et d'un étage élévateur de tension couplé à l'étage abaisseur de tension et destiné à être raccordé à une batterie d'accumulation électrique.

Selon ce procédé, l'on détermine une valeur de consigne, l'on utilise un observateur d'état pour déterminer des variables d'état, lesdites variables d'état comprenant une tension de sortie de l'étage de filtrage et une intensité de courant redressé, et l'on asservit au moins l'une des variables d'état déterminées.

Selon un mode de mise en œuvre, lorsque l'on détermine une valeur de consigne, l'on détermine une consigne de coefficient réel du premier harmonique d'une tension de sortie de l'étage de filtrage, une consigne de coefficient imaginaire du premier harmonique de la tension de sortie de l'étage de filtrage, une consigne de coefficient réel du premier harmonique d'une intensité du réseau, une consigne de coefficient imaginaire du premier harmonique de l'intensité du réseau, une consigne de coefficient de terme constant d'une intensité de courant redressé, une consigne de coefficient réel du second harmonique de l'intensité de courant redressé et une consigne de coefficient imaginaire du second harmonique de l'intensité de courant redressé.

Dans un tel mode de mise en œuvre, l'observateur d'état est utilisé dans le domaine harmonique des signaux observés. Par rapport à une approche classique de transformation rapide de Fourier, également connue sous l'expression anglo-saxonne « Fast Fourier Transform » ou sous l'acronyme correspondant « FFT », une observation dans le domaine harmonique est avantageuse car elle permet d'estimer le contenu réel des signaux observés dès la première période du signal. On enlève ainsi le temps mort généralement introduit par l'approche « FFT », dans laquelle une période de signal est nécessaire pour obtenir le contenu harmonique. De ce fait, on diminue le temps de réponse de l'asservissement. En outre, l'utilisation de l'observateur d'état dans le domaine harmonique est particulièrement adaptée pour éviter la génération d'harmoniques à basse fréquence de l'intensité de courant du réseau.

Avantageusement, lorsque l'on détermine lesdites variables d'état, l'on détermine les coefficients d'une décomposition en série de Fourier desdites variables d'état.

Dans un mode de mise en œuvre, on modélise le dispositif de charge par un modèle d'établissement de moyenne des variables d'état généralisée par rapport à la pulsation du fondamental de la tension du réseau.

Un tel modèle fournit une base de relations entre les variables d'état, les perturbations et les commandes du système. En outre, ce modèle est adapté pour être combiné à un observateur d'état utilisé dans le domaine harmonique.

Dans un mode de mise en œuvre, lorsque l'on asservit l'une desdites variables d'état déterminées, l'on détermine une commande de coefficient réel du premier harmonique d'un rapport cyclique de l'étage abaisseur de tension, une commande de coefficient imaginaire du premier harmonique du rapport cyclique de l'étage abaisseur de tension, une commande de coefficient de terme constant d'un rapport cyclique de l'étage élévateur de tension, une commande de coefficient réel du second harmonique du rapport cyclique de l'étage élévateur de tension et une commande de coefficient imaginaire du second harmonique du rapport cyclique de l'étage élévateur de tension.

Avantageusement, lorsque l'on asservit l'une desdites variables d'état déterminées, l'on calcule une erreur associée à ladite variable d'état, l'on impose un comportement exponentiellement stable de ladite erreur de la forme :

$$\dot{s}_k = -m_k.s_k - l_k.signe(s_k)$$

ou $s_k$ désigne ladite erreur,

$m_k$ désigne un premier paramètre de l'asservissement, et

$l_k$ désigne un second paramètre de l'asservissement.

Dans un mode de mise en œuvre, on détermine s'il existe un déphasage entre une tension du réseau et une intensité du réseau, puis, s'il existe un déphasage entre la tension du réseau et l'intensité du réseau, on détermine s'il existe un besoin de compenser ledit déphasage. S'il existe un déphasage entre la tension du réseau et l'intensité du réseau et s'il existe un besoin de compenser ledit déphasage, on modifie ladite valeur de consigne pour que le dispositif de charge génère une puissance réactive compensant au moins partiellement ledit déphasage existant.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1, qui a déjà été décrite, représente un dispositif de charge de l'art antérieur,
- la figure 2 illustre un dispositif de charge selon un aspect de l'invention,
- la figure 3 illustre un système de pilotage incorporé dans le dispositif de charge de la figure 2,
- la figure 4 illustre un procédé de pilotage d'un dispositif de charge selon un aspect de l'invention.

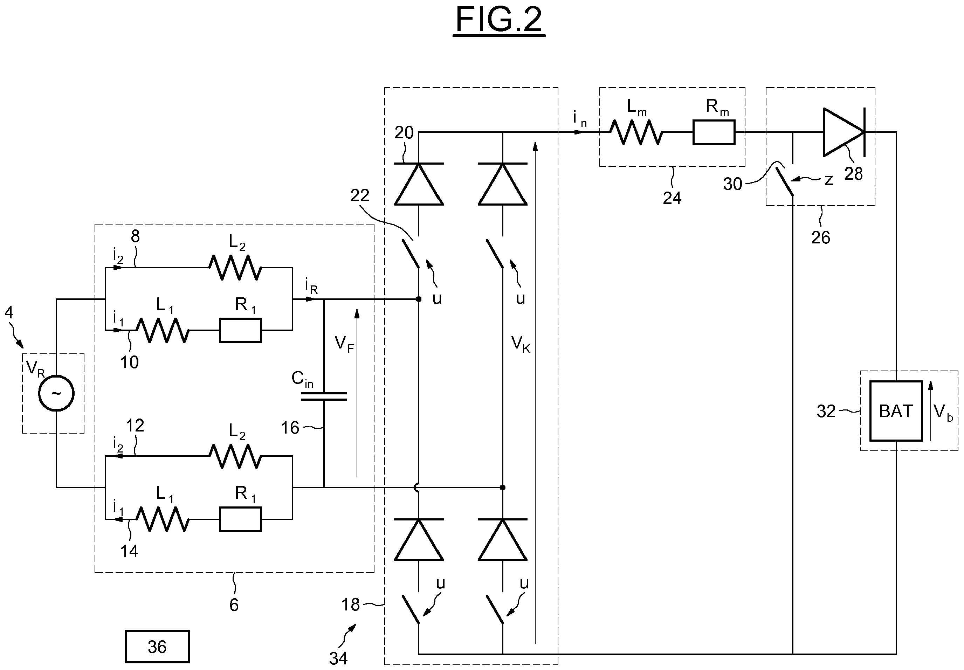

On a schématiquement représenté sur la figure 2 un dispositif de charge 34 selon un aspect de l'invention. Les éléments du dispositif 34 identiques aux éléments constituant le dispositif 2 de la figure 1 portent les mêmes références. En outre, le dispositif 34 est raccordé à un réseau électrique 4 monophasé de tension $V_R$ et d'intensité $i_R$ et à une batterie d'accumulation électrique 32 soumise à une tension $V_b$.

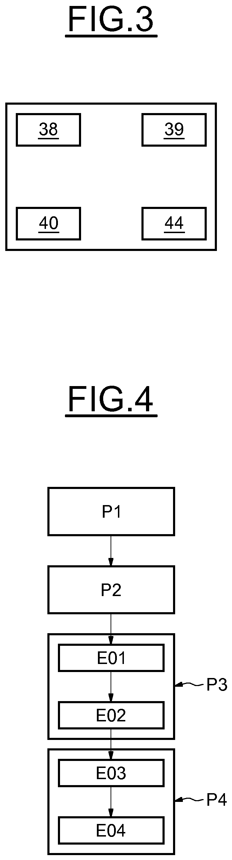

Le dispositif 34 comprend un système de pilotage 36. Le système 36 a pour fonction de commander simultanément les intensités $i_R$ et $i_n$. Le système 36 est représenté en détail sur la figure 3.

Le système 36 comprend un module d'élaboration d'une consigne 38. Comme cela sera détaillé par la suite, le module 38 est capable d'élaborer des consignes de coefficient d'harmoniques de la tension $V_F$ et des intensités $i_1$, $i_2$ et $i_n$.

Le système 36 comporte un module de mesure 39. Le module 39 est capable de mesurer les tensions $V_R$ et $V_b$. En outre, le module 39 est capable de décomposer les tensions $V_R$ et $V_b$ en série de Fourier.

Le système 36 comporte un observateur d'état 40 également communément connu sous la dénomination de filtre de Kalman. L'observateur d'état 40 a pour fonction d'estimer des variables d'état correspondant aux grandeurs pour lesquelles des consignes ont été calculées par le module 38.

Le système de pilotage 36 comporte en outre un bloc de commande en mode glissant 44, également connu sous l'appellation anglo-saxonne « sliding mode control » ou sous l'acronyme correspondant « SMC ». Le bloc 44 a pour fonction d'asservir les variables d'état dont la valeur est déterminée par l'observateur d'état 40 et la consigne est déterminée par le module 38. Pour ce faire, le bloc 44 établit un premier signal $\alpha$ de correction adressé à l'étage 18 et un deuxième signal $\beta$ de correction adressé à l'étage 26. Le signal $\alpha$ est une fonction de rapport cyclique permettant de contrôler les interrupteurs 22. Le signal $\beta$ est une fonction de rapport cyclique permettant de contrôler l'interrupteur 30.

En référence à la figure 4, on a schématiquement représenté un procédé de pilotage selon un aspect de l'invention.

Le procédé de la figure 4 comprend une première phase P1. Lors de la phase P1, on modélise le dispositif 34. Le modèle choisi tient compte des commandes $\alpha$ et $\beta$, des tensions $V_R$, $V_F$ et $V_b$ et des intensités $i_1$, $i_2$ et $i_n$.

Dans l'exemple de la figure 4, la modélisation du dispositif 34 est mise en œuvre selon le formalisme GSSA d'établissement de moyenne des variables d'état par rapport à la pulsation $\omega_r$ du fondamental de la tension $V_R$. Plus particulièrement, on établit les coefficients de Fourier des variables d'état périodiques de période $T_r = \dfrac{2\pi}{\omega_r}$. Le formalisme GSSA est également connu sous la dénomination anglo-saxonne correspondante « Generalized State-Space Averaging ». Le formalisme GSSA est détaillé dans le document SANDERS S. R., NOWOROLSKI J. M., LIU X. Z. et VERGHESE G. C., « Generalized averaging method for power conversion circuits », IEEE 21st Annual Conférence on Power Electronics Specialists, San Antonio, 1990.

Le modèle GSSA est appliqué au modèle moyen du dispositif de charge 34 à la période $T_C$ de commutation des interrupteurs 22 et 30. Dans l'exemple illustré, la période $T_C$ est 100 μs. Les valeurs $\alpha$ et $\beta$ correspondent aux moyennes des signaux de commandes de commutation u et z sur la période $T_C$. Pour déduire un signal u, z, à partir d'une valeur moyenne respective $\alpha$, $\beta$, on peut utiliser un procédé de modulation bien connu de l'homme du métier.

Pour modéliser le dispositif 34 selon le formalisme GSSA décomposé en série de Fourier, on établit le système suivant :

$$(1) \begin{cases} C_{in}.\frac{dV_F(t)}{dt} = i_R(t) - i_n(t).\alpha(t) \\ 2L_1.\frac{di_1(t)}{dt} = V_R(t) - V_F(t) - 2.R_1.i_1 \\ 2L_2.\frac{di_2(t)}{dt} = V_R(t) - V_F(t) \\ L_m.\frac{di_n(t)}{dt} = V_F(t).\alpha(t) - \beta(t).V_b(t) - R_m.i_n(t) \\ i_R(t) = i_1(t) + i_2(t) \end{cases}$$

Le formalisme GSSA est fondé sur la décomposition en série de Fourier des signaux périodiques. Pour un signal s périodique de période T, cette décomposition est donnée par l'expression suivante :

$$(2) \quad s(t) = \sum_{-K}^{K} \langle s \rangle_k(t) e^{2jk\omega t}$$

où

$$(3) \quad \langle s \rangle_k(t) = \frac{1}{T} \int_{t-T}^{t} s(\tau) e^{-2jk\omega\tau} d\tau$$

Dans les expressions (2) et (3), $\omega$ est la pulsation fondamentale du signal et $k$ est l'ordre harmonique considéré.

Dans ce cadre, les parties réelles et imaginaires des coefficients complexes de Fourier deviennent la nouvelle base de description pour le modèle. Avec ce formalisme, les modèles d'évolution d'amplitude d'harmoniques se déduisent du modèle d'évolution considérée par les opérations suivantes :

$$(4) \quad \frac{d}{dt}\langle s \rangle_k(t) = \langle \frac{d}{dt} s \rangle_k(t) - jk\omega\langle s \rangle_k(t)$$

$$(5) \quad \langle s_1 \times s_2 \rangle_k(t) \approx \sum_{i=-k}^{k} \langle s_1 \rangle_{k-i}(t) \times \langle s_2 \rangle_i(t)$$

La reconstruction temporelle des signaux à partir de leur coefficient de la décomposition de Fourier est faite en utilisant la relation :

$$(6) \quad s(t) \approx \langle s \rangle_0 + 2 \sum_k (Re(\langle s \rangle_k) \cos(k\omega t) - Im(\langle s \rangle_k) \sin(k\omega t))$$

Pour écrire le formalisme GSSA à la pulsation $\omega_r$, on définit neuf variables d'état $x_i$, $i \in [[1,9]]$, cinq variables de commande a1, a2, b0, b1, b2 et cinq variables de perturbation v1, v2, vb0, vb1 et vb2. Les variables d'état représentent des coefficients de Fourier associés à des harmoniques des signaux $V_F$, $i_1$, $i_2$ et $i_n$. Les variables de commande représentent des coefficients de Fourier associés à des harmoniques des signaux $\alpha$ et $\beta$. Les variables de perturbation représentent des coefficients de Fourier associés à des harmoniques des signaux $V_R$ et $V_b$. Les variables sont résumées dans le tableau suivant :

| Signal s | $V_F(t)$ | $i_1(t)$ | $i_2(t)$ | $\alpha(t)$ | $V_R(t)$ | $i_n(t)$ | | $V_b(t)$ | | $\beta(t)$ | |
|---|---|---|---|---|---|---|---|---|---|---|---|
| Ordre k de l'harmonique | 1 | 1 | 1 | 1 | 1 | 0 | 2 | 0 | 2 | 0 | 2 |
| $Re(\langle s \rangle_k)$ | $x_1$ | $x_3$ | $x_5$ | $a_1$ | $v_1$ | $x_7$ | $x_8$ | $V_{b0}$ | $V_{b1}$ | $b_0$ | $b_1$ |
| $Im(\langle s \rangle_k)$ | $x_2$ | $x_4$ | $x_6$ | $a_2$ | $v_2$ | | $x_9$ | | $V_{b2}$ | | $b_2$ |

Avec ces notations, le système d'équations (1) adapté au formalisme GSSA à la pulsation $\omega_r$ s'écrit de la manière suivante :

$$(7) \begin{cases} \dot{x_1} = \omega_r.x_2 + \dfrac{x_3 + x_5}{C_{in}} - \dfrac{x_7 + x_8}{C_{in}}.a_1 - \dfrac{x_9}{C_{in}}.a_2 \\[2mm] \dot{x_2} = -\omega_r.x_1 + \dfrac{x_4 + x_6}{C_{in}} - \dfrac{x_9}{C_{in}}.a_1 - \dfrac{x_7 - x_8}{C_{in}}.\alpha_2 \\[2mm] \dot{x_3} = \dfrac{1}{2L_1}.(v_1 - x_1) - \dfrac{R_1}{L_1}.x_3 + \omega_r.x_4 \\[2mm] \dot{x_4} = \dfrac{1}{2L_1}.(v_2 - x_2) - \dfrac{R_1}{L_1}.x_4 - \omega_r.x_3 \\[2mm] \dot{x_5} = \dfrac{1}{2L_2}.(v_1 - x_1) + \omega_r.x_6 \\[2mm] \dot{x_6} = \dfrac{1}{2L_2}.(v_2 - x_2) - \omega_r.x_5 \\[2mm] \dot{x_7} = \dfrac{1}{L_m}.(2x_1.a_1 + 2x_2.a_2 - V_{b0}.b_0 - 2V_{b1}.b_1 - 2V_{b2}.b_2 - R_m.x_7) \\[2mm] \dot{x_8} = 2\omega_r.x_9 + \dfrac{1}{L_m}(x_1.a_1 - x_2.a_2 - V_{b1}.b_0 - V_{b0}.b_1 - R_m.x_8) \\[2mm] \dot{x_9} = -2\omega_r.x_8 + \dfrac{1}{L_m}(x_2.a_1 + x_1.a_2 - V_{b2}.b_0 - V_{b0}.b_2 - R_m.x_9) \end{cases}$$

Le système (7) est bilinéaire de la forme :

$$(8) \quad \dot{x(t)} = A.x(t) + \left(sel_x.x(t)\right)^T.c(t) + \left(sel_{pert}.pert(t)\right)^T.c(t)$$

Dans la relation (8), c(t) est le vecteur des commandes :

$$c(t) = [a_1(t), a_2(t), b_0(t), b_1(t), b_2(t)]^T$$

Les matrices $sel_x x(t)$ et $sel_{pert} pert(t)$ contiennent les variables d'état $x_i$, $i \in [\![1,9]\!]$ multipliant les commandes et les composantes harmoniques des perturbations.

Ainsi, le comportement à basse fréquence du dispositif 34 est bien décrit par un modèle prenant en compte le premier harmonique pour les variables ($V_F$, $i_1$, $i_2$, $i_R$) de la partie du dispositif 34 en courant alternatif (partie AC), les composantes continues et deuxième harmonique pour les variables ($V_b$, $i_n$) de la partie en courant continu (partie DC).

A l'issue de la phase P1, on a choisi et établi un modèle du dispositif 34. Toutefois, on ne sort bien entendu pas du cadre de l'invention en envisageant un procédé dans lequel la phase P1 est remplacée par une phase de récupération d'un modèle préétabli et stocké dans une mémoire.

Au cours d'une deuxième phase P2, on définit des consignes dans le domaine harmonique. Pour fonctionner de manière satisfaisante, le dispositif 34 doit consommer un courant $i_R$ d'une certaine amplitude, par exemple de l'ordre de 32 A en monophasé. Le courant $i_R$ doit être en phase avec la tension $V_R$. Le courant $i_R$ doit présenter un contenu harmonique dominé par son fondamental conforme avec le standard IEC 61 000. Ce standard est bien connu de l'homme du métier. Pour plus d'informations, on pourra se rapporter au document « Standard IEC, 61000-3-2, Limits for harmonic current émissions », International Electromechanical Commission, Geneva, 2004.

Le contenu harmonique à basse fréquence du courant $i_R$ est influencé par le contenu harmonique du courant $i_n$ et par le contenu harmonique du rapport cyclique $\alpha$ car :

$$(9) \quad i_R(t) = i_n(t).\alpha(t)$$

Par exemple, lorsque $\alpha$ contient uniquement le premier harmonique à la fréquence fondamentale du réseau, et quand le courant $i_n$ est parfaitement continu, le courant $i_R$ est parfaitement sinusoïdal. En réalité, le courant $i_n$ contient aussi des harmoniques pairs multiples de la fréquence du réseau. Il en résulte la présence d'harmoniques impairs d'ordre supérieur dans le courant $i_R$. Pour répondre aux exigences harmoniques sur le courant $i_R$, on détermine une consigne ajoutant des composantes harmoniques dans le contenu harmonique de $\alpha$ correspondant aux fréquences d'harmoniques de $i_R$ à rejeter. La réduction du contenu harmonique du courant $i_n$ et l'asservissement de sa valeur continue sont réalisés à travers le rapport cyclique $\beta$.

Au vu de ce qui précède, pour atteindre les objectifs précités, les consignes $x_i^*$, $i \in [1,9]$ sont définies relativement par rapport aux variables d'état $x_i$, $i \in [[1,9]]$ respectives.

Les variables $x_4$ et $x_6$ correspondent aux amplitudes des sinus des fondamentaux pour les courants $i_1$ et $i_2$ au facteur 0,5 près. La somme $x_4+x_6$ donne l'amplitude de la composante en sinus du fondamental de $i_R$ car $i_R=i_1+i_2$. Pour obtenir l'amplitude choisie de $i_R$, on définit :

$$x_4^*(t) + x_6^*(t) = -\frac{i_{R\,crête}}{2}$$

où $i_{Rcrête}$ correspond à la valeur de crête souhaitée pour $i_R$.

Les variables $x_3$ et $x_5$ correspondent aux amplitudes des cosinus des fondamentaux pour les courants $i_1$ et $i_2$ au facteur 2 près. La somme $x_3+x_5$ donne l'amplitude de la composante en cosinus du fondamental pour $i_R$ car $i_R=i_1+i_2$. Pour obtenir un déphasage nul entre $V_R$ et $i_R$, on définit :

$$x_3^*(t) + x_5^*(t) = \frac{i_{R\,réactif}}{2} = 0$$

où $i_{Rréactif}$ correspond à la valeur de crête souhaitée pour la composante de l'intensité $i_R$ en quadrature avec $V_R$.

Dans le cas d'espèce, on définit les consignes $x_3^*$ et $x_5^*$ de telle sorte que $i_{Rréactif} = 0$ pour éviter le déphasage de $i_R$ par rapport à $v_r$.

Par ailleurs, on cherche à éviter la pollution harmonique du courant $i_R$ pour être en conformité avec le standard IEC 61000. On évite la pollution harmonique du courant $i_R$ en imposant nulles les composantes harmoniques du courant $i_n$ car $i_R = i_n.\alpha$. Ainsi, on définit :

$$x_8^*(t) = 0$$

$$x_9^*(t) = 0$$

On souhaite que l'intensité $i_n$ présente une certaine valeur moyenne minimale pour permettre une recharge efficace de la batterie. On définit alors une valeur de référence $i_{reference}$ de l'intensité $i_n$. La valeur $i_{reference}$ est définie pour être supérieure à l'amplitude de l'intensité $i_R$. Pour que l'intensité $i_n$ présente une valeur moyenne égale à la valeur $i_{reference}$, on définit :

$$x_7^*(t) = i_{reference}$$

Les variables $x_1$ et $x_2$ anticipent la dynamique du courant $i_R$ à travers l'étage de filtrage 6. Afin d'obtenir un courant $i_R$ conforme aux objectifs et en prenant en compte les relations du système d'équations (7) définissant les variables $x_3$ à $x_6$, les consignes des variables $x_1$ et $x_2$ sont établies de la manière suivante :

$$(10) \qquad x_1^*(t) = v_1(t) - \frac{\omega_r.L_1.L_2.i_{R\,crête}}{L_1 + L_2} - \frac{2.R_1.L_2}{L_1 + L_2}.x_3(t)$$

$$(11) \quad x_2^*(t) = v_2(t) - \frac{L_1.L_2.\omega_r.i_{R\,réactif}}{L_1 + L_2} - \frac{2.R_1.L_2}{L_1 + L_2}.x_4(t)$$

Le procédé comprend une troisième phase P3 d'utilisation d'un observateur d'état dans le domaine harmonique. L'observateur d'état a pour fonction de permettre l'estimation des variables d'état $x_i$, $i \in [[1,9]]$. L'observateur d'état est construit à partir du modèle établi lors de la phase P1. Le modèle est simplifié en considérant identiquement nulles les variables $V_{b1}$ et $V_{b2}$ correspondant aux harmoniques supérieurs de la tension $V_b$.

Le modèle étant non linéaire avec des relations d'observation non stationnaires correspondant aux transformations de Fourier inverse donnant les courants $i_n$ et $i_R$, les équations d'observations s'écrivent :

$$(12) \quad \widehat{i_R}(t) = \widehat{i_1}(t) + \widehat{i_2}(t)$$
$$= 2\left( \left( \widehat{x_3}(t) + \widehat{x_5}(t) \right) * \cos(\omega_r t) - \left( \widehat{x_4}(t) + \widehat{x_6}(t) \right) * \sin(\omega_r t) \right)$$

$$(13) \quad \widehat{i_n}(t) = \widehat{x_7}(t) + 2\left( \widehat{x_8}(t) * \cos(2\omega_r t) - \widehat{x_9}(t) * \sin(2\omega_r t) \right)$$

Dans les relations (12) et (13), les grandeurs surmontées d'un symbole chapeau symbolisent la valeur estimée de la grandeur considérée par l'observateur d'état. Le modèle est discrétisé à la cadence $T_s$ en utilisant la méthode d'Euler explicite. Dans l'exemple de mise en œuvre illustré, la cadence $T_s$ est 50 $\mu$s.

La phase P3 comprend une première étape E01 de prédiction de l'état. Au cours de l'étape E01, on calcule, quel que soit une variable x et un pas k, une prédiction $\hat{x}_{k|k-1}$ de sa valeur au pas k. On calcule également une prédiction $P_{k|k-1}$ de la matrice de covariance d'erreur de prédiction au pas k. Pour ce faire, on met en œuvre les équations suivantes :

$$(14) \quad \hat{x}_{k|k-1} = \hat{x}_{k-1|k-1} + T_s.g\left( \hat{x}_{k-1|k-1} \right)$$

$$(15) \quad P_{k|k-1} = F_{k-1}.P_{k-1|k-1}.F_{k-1}^T + Q_{k-1}$$

Dans l'équation (15), on définit les matrices $F_{k-1}$ et $Q_{k-1}$ comme suit :

$$F_{k-1} = I_9 + T_s.\frac{\partial g\left( \hat{x}_{k-1|k-1} \right)}{\partial \hat{x}_{k-1|k-1}}\Bigg|_{c=c_{k-1}} = f_1 T_s + I_9$$

Avec :

$$f_1 = \begin{pmatrix} 0 & w_r & \dfrac{1}{C_{in}} & 0 & \dfrac{1}{C_{in}} & 0 & -\dfrac{a_1[k-1]}{C_{in}} & -\dfrac{a_1[k-1]}{C_{in}} & \dfrac{a_2[k-1]}{C_{in}} \\[2mm] -w_r & 0 & 0 & \dfrac{1}{C_{in}} & 0 & \dfrac{1}{C_{in}} & -\dfrac{a_2[k-1]}{C_{in}} & \dfrac{a_2[k-1]}{C_{in}} & -\dfrac{a_1[k-1]}{C_{in}} \\[2mm] -\dfrac{1}{2L_1} & 0 & -\dfrac{R_1}{L_1} & w_r & 0 & 0 & 0 & 0 & 0 \\[2mm] 0 & -\dfrac{1}{2L_1} & -w_r & -\dfrac{R_1}{L_1} & 0 & 0 & 0 & 0 & 0 \\[2mm] -\dfrac{1}{2L_2} & 0 & 0 & 0 & 0 & w_r & 0 & 0 & 0 \\[2mm] 0 & -\dfrac{1}{2L_2} & 0 & 0 & -w_r & 0 & 0 & 0 & 0 \\[2mm] \dfrac{2a_1[k-1]}{L_m} & \dfrac{2a_2[k-1]}{L_m} & 0 & 0 & 0 & 0 & -\dfrac{R_m}{L_m} & 0 & 0 \\[2mm] \dfrac{a_1[k-1]}{L_m} & -\dfrac{a_2[k-1]}{L_m} & 0 & 0 & 0 & 0 & 0 & -\dfrac{R_m}{L_m} & 2\,w_r \\[2mm] \dfrac{a_2[k-1]}{L_m} & \dfrac{a_1[k-1]}{L_m} & 0 & 0 & 0 & 0 & 0 & -2\,w_r & -\dfrac{R_m}{L_m} \end{pmatrix}$$

$$Q_{k-1} = I_9 \,.100$$

La fonction g est définie comme suit :

$$g\big(\hat{x}_{k-1|k-1}\big)$$
$$= A.\hat{x}_{k-1|k-1} + \big(sel_x.\hat{x}_{k-1|k-1}\big)^T . c_{k-1}(t)$$
$$+ \big(sel_{pert}.pert_{k-1}(t)\big)^T . c_{k-1}(t)$$

avec :

$$A = \begin{pmatrix} 0 & w_r & \dfrac{1}{C_{in}} & 0 & \dfrac{1}{C_{in}} & 0 & 0 & 0 & 0 \\[2mm] -w_r & 0 & 0 & \dfrac{1}{C_{in}} & 0 & \dfrac{1}{C_{in}} & 0 & 0 & 0 \\[2mm] -\dfrac{1}{2L_1} & 0 & -\dfrac{R_1}{L_1} & w_r & 0 & 0 & 0 & 0 & 0 \\[2mm] 0 & -\dfrac{1}{2L_1} & -w_r & -\dfrac{R_1}{L_1} & 0 & 0 & 0 & 0 & 0 \\[2mm] -\dfrac{1}{2L_2} & 0 & 0 & 0 & 0 & w_r & 0 & 0 & 0 \\[2mm] 0 & -\dfrac{1}{2L_2} & 0 & 0 & -w_r & 0 & 0 & 0 & 0 \\[2mm] 0 & 0 & 0 & 0 & 0 & 0 & -\dfrac{R_m}{L_m} & 0 & 0 \\[2mm] 0 & 0 & 0 & 0 & 0 & 0 & 0 & -\dfrac{R_m}{L_m} & 2\,w_r \\[2mm] 0 & 0 & 0 & 0 & 0 & 0 & 0 & -2\,w_r & -\dfrac{R_m}{L_m} \end{pmatrix}$$

La phase P3 comprend une deuxième étape E02 de mise à jour de la valeur prédite. Au cours de l'étape E02, on détermine, quelle que soit une variable x et un pas k, un écart de sortie $\widetilde{y_k}$ , un gain optimal de Kalman $K_k$, une valeur mise à jour $\hat{x}_{k|k}$ de l'état au pas k et une valeur mise à jour $P_{k|k}$ de la matrice de covariance du bruit de mesure.

$$(16) \qquad \widetilde{y_k} = y_k - H_k \,.\, \hat{x}_{k|k-1}$$

$$(17) \qquad S_k = H_k . P_{k|k-1} . H_k^T + R_k$$

$$(18) \qquad K_k = P_{k|k-1} . H_k^T . S_k^{* -1}$$

$$(19) \qquad \hat{x}_{k|k} = \hat{x}_{k|k-1} + K_k . \widetilde{y_k}$$

$$(20) \qquad P_{k|k} = (I_9 - K_k . H_k) . P_{k|k-1}$$

Dans l'équation (15), la matrice $Q_k$ est la matrice de covariance de bruit d'état. Dans l'équation (17), la matrice $R_k$ est la matrice de covariance des bruits de mesure. La matrice $F_k$ est la jacobienne du modèle établi à la phase P1 calculée au pas k. L'adaptation de l'estimation de l'état du système est réalisée à travers le gain $K_k$ optimal de Kalman. Les matrices $Q_k$ et $R_k$ sont utilisées comme paramètres pour assurer la convergence du filtre de Kalman. La matrice $H_K$ contient les composantes sinus et cosinus présentes dans les relations d'observation (12) et (13) :

$$H_k = \begin{bmatrix} 0 & 0 & 2\,C(\omega_r t) & -2\,S(\omega_r t) & 2\,C(\omega_r t) & -2\,S(\omega_r t) & 0 & 0 & 0 \\ 0 & 0 & 0 & 0 & 0 & 0 & 1 & 2\,C(2\omega_r t) & -2\,S(2\omega_r t) \end{bmatrix}$$

Dans l'expression de la matrice $H_k$, les fonctions C et S sont des notations abrégées des fonctions Cosinus et Sinus respectives.

Le procédé comprend une quatrième phase P4 de synthèse de la loi de commande. La phase P4 a pour but d'asservir les variables d'état $x_1$, $x_2$, $x_7$ à $x_9$ par rapport aux consignes respectives $x_1{}^*$, $x_2{}^*$, $x_7{}^*$ à $x_9{}^*$ par commande linéaire fondée sur l'approche par mode glissant.

La phase P4 comprend une première étape E03 de calcul des variables de glissement $s_i$, $i \in \{1,2,7,8,9\}$. Au cours de l'étape E03, quel que soit $i \in \{1,2,7,8,9\}$, on calcule la variable de glissement $s_i$ correspondant à l'erreur d'asservissement :

$$(21) \quad s_i = x_i - x_i^*$$

La phase P4 comprend une deuxième étape E04 d'asservissement des variables de glissement. Au cours de l'étape E04, on impose un comportement exponentiellement stable des variables de glissement de la forme :

$$(22) \quad \dot{s}_i(t) = -m_i.s_i - l_i.\text{sign}(s_i)$$

On assure ainsi la convergence vers zéro de l'erreur d'asservissement. Les paramètres $m_i$ et $l_i$ sont utilisés pour régler la vitesse de convergence des variables de glissement et la vitesse de convergence des variables d'état vers leur référence. Les paramètres $m_i$ et $l_i$ sont préparamétrés dans le bloc de commande 44 du système de pilotage 36. Dans l'exemple illustré, les paramètres sont préparamétrés avec les valeurs suivantes :

$m_1 = 1500$
$m_2 = 1500$
$m_3 = 3200$
$m_4 = 4000$
$m_5 = 4000$
$l_1 = 5$
$l_2 = 5$
$l_3 = 3000$
$l_4 = 5$
$l_5 = 5$

Comme cela sera expliqué par la suite, ces valeurs sont particulièrement adaptées pour un dispositif de charge de batterie de véhicule automobile car elles permettent une grande précision, un temps de réponse faible et une bonne stabilité.

On peut alors déterminer les variables de commande $a_1$, $a_2$, $b_0$, $b_1$ et $b_2$. Chaque variable de commande est une fonction des variables de glissement et des variables d'état du système. L'expression analytique des variables de commande en fonction des variables de glissement et des variables d'état du système est obtenue après résolution du système d'équations (22) dans lequel les expressions des dérivées des variables de glissement sont explicitées par le modèle représenté par le système d'équations (7). Par un logiciel de calcul symbolique, on établit l'expression des variables de commande en fonction des variables de glissement et des variables d'état :

$$a1 = C_{\text{in}} \left( \frac{-w_r x_2 x_7 + w_r x_2 x_8 + m_1 s_1(-x_7 + x_8) + l_1 \text{sign}(s_1)(-x_7 + x_8)}{-x_7{}^2 + x_8{}^2 + x_9{}^2} \right. $$
$$\left. + \frac{m_2 s_2 x_9 - l_2 \text{sign}(s_2) x_9 - w_r x_1 x_9}{-x_7{}^2 + x_8{}^2 + x_9{}^2} \right) - \frac{x_7 x_{ri} + x_8 x_{ri} + x_9 x_{rr}}{-x_7{}^2 + x_8{}^2 + x_9{}^2}$$

$$a2 = C_{\text{in}} \left( \frac{w_r x_1 x_7 + w_r x_1 x_8 - m_2 s_2(x_7 + x_8) - l_2 \text{sign}(s_2)(x_7 + x_8)}{-x_7^2 + x_8^2 + x_9^2} \right.$$
$$\left. + \frac{m_1 s_1 x_9 + l_1 \text{sign}(s_1) x_9 + w_r x_2 x_9}{-x_7{}^2 + x_8{}^2 + x_9{}^2} \right) + \frac{x_9 x_{ri} - (x_7 + x_8) x_{rr}}{-x_7{}^2 + x_8{}^2 + x_9{}^2}$$

$$b0 = -\frac{1}{V_{b0}^2(-x_7^2 + x_8^2 + x_9^2)}\big(-R_m V_{b0}x_7^3 + R_m V_{b0}x_7x_8^2 + R_m V_{b0}x_7x_9{}^2$$
$$+ L_m(-m_7s_7V_{b0} - l_7\text{sign}(s_7)V_{b0})(-x_7^2 + x_8^2 + x_9^2)$$
$$+ 2C_{in}\big(m_2s_2V_{b0}x_2x_7 + l_2\text{sign}(s_2)V_{b0}x_2x_7 + m_2s_2V_{b0}x_2x_8$$
$$+ l_2\text{sign}(s_2)V_{b0}x_2x_8 - 2V_{b0}w_rx_1x_2x_8 - m_2s_2V_{b0}x_1x_9$$
$$- l_2\text{sign}(s_2)V_{b0}x_1x_9 + V_{b0}w_rx_1^2x_9 - V_{b0}w_rx_2^2x_9$$
$$+ m_1s_1(-x_1(-V_{b0}x_7 + V_{b0}x_8) - V_{b0}x_2x_9)$$
$$+ l_1\text{sign}(s_1)\left(-x_1(-V_{b0}x_7 + V_{b0}x_8) - V_{b0}x_2x_9\right)\big) + 2V_{b0}x_1x_7x_{ri}$$
$$- 2V_{b0}x_1x_8x_{ri} - 2V_{b0}x_2x_9x_{ri} + 2V_{b0}x_2x_7x_{rr} + 2V_{b0}x_2x_8x_{rr}$$
$$- 2V_{b0}x_1x_9x_{rr}\big)$$

$$b1 = \frac{1}{V_{b0}^3(-x_7^2 + x_8^2 + x_9^2)}\big(-R_m V_{b0}{}^2x_7{}^2x_8 + R_m V_{b0}^2x_8^3 + R_m V_{b0}{}^2x_8 x_9{}^2$$
$$+ L_m\left(-m_8s_8V_{b0}^2 - l_8\text{sign}(s_8)V_{b0}{}^2 - 2V_{b0}^2w_rx_9\right)(-x_7^2 + x_8^2 + x_9^2)$$
$$+ C_{in}\left(-m_2s_2V_{b0}^2x_2x_7 - l_2\text{sign}(s_2)V_{b0}^2x_2x_7 + 2V_{b0}^2w_rx_1x_2x_7\right.$$
$$- m_2s_2V_{b0}^2x_2x_8 - l_2\text{sign}(s_2)V_{b0}^2x_2x_8 - m_2s_2V_{b0}^2x_1x_9$$
$$- l_2\text{sign}(s_2)V_{b0}^2x_1x_9 + V_{b0}^2w_rx_1^2x_9 + V_{b0}^2w_rx_2^2x_9$$
$$+ m_1s_1\left(x_1\left(V_{b0}^2x_7 - V_{b0}^2x_8\right) + V_{b0}^2x_2x_9\right)$$
$$+ l_1\text{sign}(s_1)\left(x_1\left(V_{b0}^2x_7 - V_{b0}^2x_8\right) + V_{b0}^2x_2x_9\right)\big) + V_{b0}^2x_1x_7x_{ri}$$
$$- V_{b0}^2x_1x_8x_{ri} + V_{b0}^2x_2x_9x_{ri} - V_{b0}^2x_2x_7x_{rr} - V_{b0}^2x_2x_8x_{rr}$$
$$- V_{b0}^2x_1x_9x_{rr}\big)$$

$$b2 = \frac{1}{V_{b0}^3(-x_7^2 + x_8^2 + x_9^2)}\big(-R_m V_{b0}{}^2x_7{}^2x_9 + R_m V_{b0}^2x_8^2x_9 + R_m V_{b0}^2x_9^3$$
$$- L_m\left(m_9s_9V_{b0}^2 + l_9\text{sign}(s_9)V_{b0}^2 - 2V_{b0}^2w_rx_8\right)(-x_7^2 + x_8^2 + x_9^2)$$
$$+ C_{in}\left(-V_{b0}^2w_rx_1^2x_7 + m_1s_1V_{b0}^2x_2x_7 + l_1\text{sign}(s_1)V_{b0}^2x_2x_7\right.$$
$$+ V_{b0}^2w_rx_2^2x_7 - V_{b0}^2w_rx_1^2x_8 - m_1s_1V_{b0}^2x_2x_8 - l_1\text{sign}(s_1)V_{b0}^2x_2x_8$$
$$- V_{b0}^2w_rx_2^2x_8 - m_1s_1V_{b0}^2x_1x_9 - l_1\text{sign}(s_1)V_{b0}^2x_1x_9$$
$$- m_2s_2\left(x_1\left(-V_{b0}^2x_7 - V_{b0}^2x_8\right) + V_{b0}^2x_2x_9\right)$$
$$- l_2\text{sign}(s_2)\left(x_1\left(-V_{b0}^2x_7 - V_{b0}^2x_8\right) + V_{b0}^2x_2x_9\right)\big) + V_{b0}^2x_2x_7x_{ri}$$
$$- V_{b0}^2x_2x_8x_{ri} - V_{b0}^2x_1x_9x_{ri} + V_{b0}^2x_1x_7x_{rr} + V_{b0}^2x_1x_8x_{rr}$$
$$- V_{b0}^2x_2x_9x_{rr}\big)$$

Dans les formules ci-dessus, les variables $x_{rr}$ et $x_{ri}$; correspondent respectivement à l'amplitude souhaitée pour la composante en sinus du courant $i_R$ et l'amplitude souhaitée pour la composante en cosinus du courant $i_R$. Ainsi, la forme souhaitée pour le courant $i_R$ apparaît dans les expressions des commandes en fonction des variables de glissement et des variables d'état.

De ce fait, le facteur de déphasage du dispositif de charge 32 et en conséquence les puissances active et réactive peuvent être réglées par rapport aux demandes du réseau électrique 4.

Il est possible de vérifier que la loi de commande déterminée est stable grâce à la théorie de Lyapunov pour le cas où l'intensité $i_n$ est strictement positive. Pour ce faire, il suffit de démontrer que le système défini par les erreurs d'asservissement est asymptotiquement stable, ce dont il résulte que l'ensemble *{commande, système en commutation}* est asymptotiquement stable.

Une fonction candidate de Lyapunov appropriée est la fonction :

$$V\big(s_i(x)\big) = \sum_i s_i(x)^2$$

avec :

$$\lim_{s_i(x) \to \infty} \big|V\big(s_i(x)\big)\big| \to \infty$$

Sa dérivée est rendue définie négative par le choix des paramètres $m_i$ et $l_i$. Le choix des paramètres $m_i$ et $l_i$ indiqué précédemment convient et impose des temps de réponse comparables pour les deux courants à asservir.

Dans le cas de non-commandabilité du courant $i_R$, c'est-à-dire dans le cas d'une valeur nulle du courant $i_n$, on met en œuvre une saturation des rapports cycliques $\alpha$ et $\beta$. Dans ce cas, l'interrupteur 30 de l'étage 26 est fermé et l'étage 18 redresse la tension $V_F$ pour faire monter le courant $i_n$. Le comportement du système en saturation dans ce cas est stable.

Au vu de ce qui précède, il est proposé un procédé de pilotage du dispositif de charge 34. Ce procédé utilise un observateur d'état dans le domaine harmonique pour déterminer les variables d'état du dispositif 34 sans ajouter un capteur supplémentaire. En fonctionnement dans le domaine harmonique, on parvient à asservir le courant $i_R$ et le courant $i_n$ de manière à augmenter la robustesse du courant $i_R$ par rapport aux variations de la tension $V_R$, à supprimer le déphasage entre la tension $V_R$ et l'intensité $i_R$ et à répondre aux exigences harmoniques sur le courant $i_R$. En outre, on évite l'apparition d'erreurs sur la régulation de l'intensité de courant redressé $i_n$.

Dans une variante de mise en œuvre du procédé selon l'invention, on détermine au début du procédé s'il existe un déphasage $\varphi_{i/r}$ entre la tension $v_R$ et l'intensité $i_R$. S'il n'existe pas un tel déphasage $\varphi_{i/r}$, les valeurs de consigne $x_i^*$ sont paramétrées comme dans le mode de mise en œuvre précédemment décrit. S'il existe un déphasage $\varphi_{i/r}$, on détermine s'il existe un besoin de compenser ce déphasage $\varphi_{i/r}$. Cela peut en particulier être le cas si le distributeur d'énergie électrique propose de rémunérer la compensation du déphasage $\varphi_{i/r}$, en offrant une réduction sur le prix de l'énergie électrique par exemple. S'il n'existe pas un tel besoin, les valeurs de consigne $x_i^*$ sont paramétrées comme dans le mode de mise en œuvre précédemment décrit. S'il existe un tel besoin, les valeurs de consignes $x_i^*$ sont paramétrées pour que le dispositif de charge 34 génère une puissance réactive tendant à compenser au moins partiellement le déphasage $\varphi_{i/r}$.

Avec une telle variante, on peut compenser un défaut initial du réseau d'électricité si besoin et si l'utilisateur du dispositif de charge y trouve un intérêt.

**Revendications**

1. Dispositif de charge (34) d'une batterie d'accumulation électrique (32) comprenant un étage de filtrage (6) destiné à être raccordé au réseau électrique (4), un étage abaisseur de tension (18) raccordé à l'étage de filtrage (6) et un étage élévateur de tension (26) couplé à l'étage abaisseur de tension (18) et destiné à être raccordé à une batterie d'accumulation électrique (32), ledit dispositif de charge (34) comprenant un système de pilotage (36) d'au moins l'un des étages (6, 18, 26) du dispositif de charge (34), **caractérisé en ce que** le système de pilotage (36) comprend un observateur d'état (40) d'au moins deux variables d'état ($x_i$), lesdites variables d'état comprenant une tension de sortie ($V_F$) de l'étage de filtrage (6) et une intensité ($i_n$) de courant redressé.

2. Dispositif (34) selon la revendication 1, dans lequel l'étage de filtrage (6) comprend une première branche (8) et une deuxième branche (10), ledit observateur d'état (40) étant apte à déterminer au moins une variable d'état supplémentaire ($x_i$) choisie parmi une intensité ($i_2$) de courant circulant dans la première branche (8), une intensité ($i_1$) de courant circulant dans la deuxième branche (10) et une intensité ($i_R$) du réseau (4).

3. Dispositif (34) selon la revendication 1 ou 2, comprenant un bloc de commande en mode glissant (44) comprenant des moyens pour recevoir une valeur et un signe d'une erreur ($s_i$) associée au moins l'une desdites variables d'état déterminées ($x_i$), une valeur mesurée de la tension ($V_R$) du réseau (4) et une valeur mesurée de la tension (V$_b$) aux bornes de la batterie (32).

4. Dispositif (34) selon l'une quelconque des revendications 1 à 3, dans lequel au moins un étage parmi l'étage abaisseur de tension (18) et l'étage élévateur de tension (26) est contrôlé par une fonction de rapport cyclique (u, z), ledit dispositif (34) comprenant un bloc d'asservissement d'au moins l'une desdites variables d'état (x$_i$) déterminées, le bloc d'asservissement étant apte à déterminer une fonction de rapport cyclique corrigée.

5. Procédé de pilotage d'un dispositif de charge (34) de batterie d'accumulation électrique (32) doté d'un étage de filtrage (6) destiné à être raccordé au réseau électrique (4), d'un étage abaisseur de tension (18) raccordé à l'étage de filtrage (6) et d'un étage élévateur de tension (26) couplé à l'étage abaisseur de tension (18) et destiné à être raccordé à une batterie d'accumulation électrique (32), dans lequel on détermine une valeur de consigne (x$_i$*), on utilise un observateur d'état pour déterminer des variables d'état, lesdites variables d'état comprenant une tension de sortie (V$_F$) de l'étage de filtrage (6) et une intensité (i$_n$) de courant redressé, on asservit au moins l'une desdites variables d'état déterminées.

6. Procédé selon la revendication 5, dans lequel, lorsque l'on détermine une valeur de consigne (x$_i$*), l'on détermine une consigne (x$_1$*) de coefficient réel du premier harmonique d'une tension de sortie (V$_F$) de l'étage de filtrage (6), une consigne (x$_2$*) de coefficient imaginaire du premier harmonique de la tension de sortie (V$_F$) de l'étage de filtrage (6), une consigne (x$_3$*, x$_5$*) de coefficient réel du premier harmonique d'une intensité (i$_1$, i$_2$) du réseau (4), une consigne (x$_4$*, x$_6$*) de coefficient imaginaire du premier harmonique de l'intensité (i$_1$, i$_2$) du réseau (4), une consigne (x$_7$*) de coefficient de terme constant d'une intensité de courant redressé (i$_n$), une consigne (x$_8$*) de coefficient réel du second harmonique de l'intensité de courant redressé (i$_n$) et une consigne (x$_9$*) de coefficient imaginaire du second harmonique de l'intensité de courant redressé (i$_n$).

7. Procédé selon la revendication 5 ou 6 dans lequel, lorsque l'on détermine lesdites variables d'état, l'on détermine des coefficients (x$_i$) d'une décomposition en série de Fourier desdites variables d'état.

8. Procédé selon l'une quelconque des revendications 5 à 7, dans lequel on modélise le dispositif de charge (34) par un modèle d'établissement de moyenne des variables d'état par rapport à la pulsation (ω$_r$) du fondamental de la tension (V$_R$) du réseau (4).

9. Procédé selon l'une quelconque des revendications 5 à 8, dans lequel, lorsque l'on asservit au moins l'une desdites variables d'état déterminées, l'on détermine une commande (a$_1$) de coefficient réel du premier harmonique d'un rapport cyclique (α) de l'étage abaisseur de tension (18), une commande (a$_2$) de coefficient imaginaire du premier harmonique du rapport cyclique (α) de l'étage abaisseur de tension (18), une commande (b$_0$) de coefficient de terme constant d'un rapport cyclique (β) de l'étage élévateur de tension (26), une commande (b$_1$) de coefficient réel du second harmonique du rapport cyclique (β) de l'étage élévateur de tension (26) et une commande (b$_2$) de coefficient imaginaire du second harmonique du rapport cyclique (β) de l'étage élévateur de tension (26).

10. Procédé selon l'une quelconque des revendications 5 à 9, dans lequel, lorsque l'on asservit au moins l'une desdites variables d'état déterminées, l'on calcule une erreur (s$_k$) associée à ladite variable d'état, l'on impose un comportement exponentiellement stable de ladite erreur de la forme :

$$\dot{s}_k = -m_k.s_k - l_k.signe(s_k)$$

où s$_k$ désigne ladite erreur,

    m$_k$ désigne un premier paramètre de l'asservissement, et
    l$_k$ désigne un second paramètre de l'asservissement.

11. Procédé selon l'une quelconque des revendications 5 à 10, dans lequel on détermine s'il existe un déphasage entre une tension (v$_R$) du réseau (4) et une intensité (i$_R$) du réseau (4), puis, s'il existe un déphasage entre la tension du réseau et l'intensité du réseau, on détermine s'il existe un besoin de compenser ledit déphasage, et dans lequel, s'il existe un déphasage entre la tension du réseau et l'intensité du réseau et s'il existe un besoin de compenser ledit déphasage, on modifie ladite valeur de consigne (x$_i$*) pour que le dispositif de charge (34) génère une puissance réactive compensant au moins partiellement ledit déphasage.

**Patentansprüche**

1. Ladevorrichtung (34) einer elektrischen Speicherbatterie (32), die eine Filterstufe (6), die dazu bestimmt ist, an das Stromnetz (4) angeschlossen zu werden, eine an die Filterstufe (6) angeschlossene Spannungsabwärtswandlungsstufe (18) und eine Spannungsaufwärtswandlungsstufe (26) enthält, die mit der Spannungsabwärtswandlungsstufe (18) gekoppelt und dazu bestimmt ist, an eine elektrische Speicherbatterie (32) angeschlossen zu werden, wobei die Ladevorrichtung (34) ein Steuersystem (36) mindestens einer der Stufen (6, 18, 26) der Ladevorrichtung (34) enthält, **dadurch gekennzeichnet, dass** das Steuersystem (36) einen Zustandsbeobachter (40) von mindestens zwei Zustandsvariablen $(x_i)$ enthält, wobei die Zustandsvariablen eine Ausgangsspannung $(V_F)$ der Filterstufe (6) und eine Stärke $(i_n)$ eines gleichgerichteten Stroms enthalten.

2. Vorrichtung (34) nach Anspruch 1, wobei die Filterstufe (6) einen ersten Zweig (8) und einen zweiten Zweig (10) enthält, wobei der Zustandsbeobachter (40) mindestens eine zusätzliche Zustandsvariable $(x_i)$ bestimmen kann, ausgewählt aus einer Stärke $(i_2)$ eines im ersten Zweig (8) fließenden Stroms, einer Stärke $(i_1)$ eines im zweiten Zweig (10) fließenden Stroms und einer Stromstärke $(i_R)$ des Netzes (4).

3. Vorrichtung (34) nach Anspruch 1 oder 2, die einen Steuerblock im Gleitmodus (44) enthält, der Einrichtungen enthält, um einen Wert und ein Vorzeichen eines Fehlers $(s_i)$, der mindestens einer der bestimmten Zustandsvariablen $(x_i)$ zugeordnet ist, einen gemessenen Wert der Spannung $(V_R)$ des Netzes (4) und einen gemessenen Wert der Spannung $(V_b)$ an den Polen der Batterie (32) zu empfangen.

4. Vorrichtung (34) nach einem der Ansprüche 1 bis 3, wobei mindestens eine Stufe unter der Spannungsabwärtswandlungsstufe (18) und der Spannungsaufwärtswandlungsstufe (26) von einer Tastverhältnisfunktion (u, z) kontrolliert wird, wobei die Vorrichtung (34) einen Regelungsblock mindestens einer der bestimmten Zustandsvariablen $(x_i)$ enthält, wobei der Regelungsblock eine korrigierte Tastverhältnisfunktion bestimmen kann.

5. Verfahren zum Steuern einer Ladevorrichtung (34) einer elektrischen Speicherbatterie (32), die mit einer Filterstufe (6), die dazu bestimmt ist, an das Stromnetz (4) angeschlossen zu werden, einer an die Filterstufe (6) angeschlossenen Spannungsabwärtswandlungsstufe (18) und einer Spannungsaufwärtswandlungsstufe (26) versehen ist, die mit der Spannungsabwärtswandlungsstufe (18) gekoppelt und dazu bestimmt ist, an eine elektrische Speicherbatterie (32) angeschlossen zu werden, wobei ein Sollwert $(x_i^*)$ bestimmt wird, ein Zustandsbeobachter verwendet wird, um Zustandsvariable zu bestimmen, wobei die Zustandsvariablen eine Ausgangsspannung $(V_F)$ der Filterstufe (6) und eine Stärke $(i_n)$ eines gleichgerichteten Stroms enthalten, mindestens eine der bestimmten Zustandsvariablen geregelt wird.

6. Verfahren nach Anspruch 5, wobei, wenn ein Sollwert $(x_i^*)$ bestimmt wird, ein Sollwert $(x_i^*)$ eines realen Koeffizienten der ersten Harmonischen einer Ausgangsspannung $(V_F)$ der Filterstufe (6), ein Sollwert $(x_2^*)$ eines imaginären Koeffizienten der ersten Harmonischen der Ausgangsspannung $(V_F)$ der Filterstufe (6), ein Sollwert $(x_3^*, x_s^*)$ eines realen Koeffizienten der ersten Harmonischen einer Stromstärke $(i_1, i_2)$ des Netzes (4), ein Sollwert $(x_4^*, x_6^*)$ eines imaginären Koeffizienten der ersten Harmonischen der Stromstärke $(i_1, i_2)$ des Netzes (4), ein Sollwert $(x_7^*)$ eines Koeffizienten eines konstanten Terms einer Stärke eines gleichgerichteten Stroms $(i_n)$, ein Sollwert $(x_8^*)$ eines realen Koeffizienten der zweiten Harmonischen der Stärke eines gleichgerichteten Stroms $(i_n)$ und ein Sollwert $(x_9^*)$ eines imaginären Koeffizienten der zweiten Harmonischen der Stärke eines gleichgerichteten Stroms $(i_n)$ bestimmt werden.

7. Verfahren nach Anspruch 5 oder 6 wobei, wenn die Zustandsvariablen bestimmt werden, Koeffizienten $(x_i)$ einer Fourierreihe-Zerlegung der Zustandsvariablen bestimmt werden.

8. Verfahren nach einem der Ansprüche 5 bis 7, wobei die Ladevorrichtung (34) durch ein Aufbaumodell eines Mittelwerts der Zustandsvariablen bezüglich der Kreisfrequenz $(\omega_r)$ der Grundkomponente der Spannung $(V_R)$ des Netzes (4) modelliert wird.

9. Verfahren nach einem der Ansprüche 5 bis 8, wobei, wenn mindestens eine der bestimmten Zustandsvariablen geregelt wird, eine Steuerung $(a_1)$ eines realen Koeffizienten der ersten Harmonischen eines Tastverhältnisses $(\alpha)$ der Spannungsabwärtswandlungsstufe (18), eine Steuerung $(a_2)$ eines imaginären Koeffizienten der ersten Harmonischen des Tastverhältnisses $(\alpha)$ der Spannungsabwärtswandlungsstufe (18), eine Steuerung $(b_0)$ eines Koeffizienten eines konstanten Terms eines Tastverhältnisses $(\beta)$ der Spannungsaufwärtswandlungsstufe (26), eine Steuerung $(b_1)$ eines realen Koeffizienten der zweiten Harmonischen des Tastverhältnisses $(\beta)$ der Spannungsaufwärtswandlungsstufe (26) und eine Steuerung $(b_2)$ eines imaginären Koeffizienten der zweiten Harmonischen des Tastverhältnisses (β) der Spannungsaufwärtswandlungsstufe (26) bestimmt wird.

10. Verfahren nach einem der Ansprüche 5 bis 9, wobei, wenn mindestens eine der bestimmten Zustandsvariablen geregelt wird, ein der Zustandsvariablen zugeordneter Fehler ($s_k$) berechnet wird, ein exponentiell stabiles Verhalten des Fehlers der folgenden Form vorgegeben wird:

$$\dot{S}_k = -m_k.s_k - l_k.\mathrm{Vorzeichen}(s_k)$$

wobei $s_k$ den Fehler bezeichnet,

m $m_k$ einen ersten Parameter der Regelung bezeichnet, und
$l_k$ einen zweiten Parameter der Regelung bezeichnet.

11. Verfahren nach einem der Ansprüche 5 bis 10, wobei bestimmt wird, ob es eine Phasenverschiebung zwischen einer Spannung ($V_R$) des Netzes (4) und einer Stromstärke ($i_R$) des Netzes (4) gibt, dann, wenn es eine Phasenverschiebung zwischen der Spannung des Netzes und der Stromstärke des Netzes gibt, bestimmt wird, ob es einen Bedarf gibt, die Phasenverschiebung zu kompensieren, und wobei, wenn es eine Phasenverschiebung zwischen der Spannung des Netzes und der Stromstärke des Netzes gibt, und wenn es einen Bedarf gibt, die Phasenverschiebung zu kompensieren, der Sollwert ($x_i^*$) so verändert wird, dass die Ladevorrichtung (34) eine reaktive Leistung erzeugt, die die Phasenverschiebung zumindest teilweise kompensiert.

**Claims**

1. Charging device (34) for charging an electrical storage battery (32), comprising a filtering stage (6) intended to be connected to the electrical network (4), a voltage buck stage (18) connected to the filtering stage (6) and a voltage boost stage (26) coupled with the voltage buck stage (18) and intended to be connected to an electrical storage battery (32), said charging device (34) comprising a control system (36) for controlling at least one of the stages (6, 18, 26) of the charging device (34), **characterized in that** the control system (36) comprises a state observer (40) for observing at least two state variables ($x_i$) , said state variables including an output voltage ($V_F$) of the filtering stage (6) and a rectified current ($i_n$) .

2. Device (34) according to Claim 1, wherein the filtering stage (6) comprises a first branch (8) and a second branch (10), said state observer (40) being able to determine at least one additional state variable ($x_i$) chosen from a current ($i_2$) flowing in the first branch (8), a current ($i_1$) flowing in the second branch (10) and a current ($i_R$) of the network (4).

3. Device (34) according to Claim 1 or 2, comprising a sliding mode control unit (44) comprising means for receiving a value and a sign of an error ($s_i$) associated with at least one of said determined state variables ($x_i$) , a measured value of the voltage ($V_R$) of the network (4) and a measured value of the voltage ($V_b$) at the terminals of the battery (32).

4. Device (34) according to any one of Claims 1 to 3, wherein at least one stage out of the voltage buck stage (18) and the voltage boost stage (26) is controlled by a duty cycle function (u, z), said device (34) comprising a control unit for controlling at least one of said determined state variables ($x_i$), the control unit being able to determine a corrected duty cycle function.

5. Control method for controlling a charging device (34) for charging an electrical storage battery (32), provided with a filtering stage (6) intended to be connected to the electrical network (4), with a voltage buck stage (18) connected to the filtering stage (6) and with a voltage boost stage (26) coupled with the voltage buck stage (18) and intended to be connected to an electrical storage battery (32), wherein a setpoint value ($x_i^*$) is determined, a state observer is used to determine state variables, said state variables including an output voltage ($V_F$) of the filtering stage (6) and a rectified current ($i_n$), at least one of said determined state variables is controlled.

6. Method according to Claim 5, wherein, when a setpoint value ($x_i^*$) is determined, a setpoint ($x_1^*$) with a real coefficient for the first harmonic of an output voltage ($V_F$) of the filtering stage (6), a setpoint ($x_2^*$) with an imaginary coefficient for the first harmonic of the output voltage ($V_F$) of the filtering stage (6), a setpoint ($x_3^*$, $x_5^*$) with a real coefficient for the first harmonic of a current ($i_1$, $i_2$) of the network (4), a setpoint ($x_4^*$, $x_6^*$) with an imaginary coefficient for the first harmonic of the current ($i_1$, $i_2$) of the network (4), a setpoint ($x_7^*$) with a constant-term coefficient for a rectified

current ($i_n$), a setpoint ($x_8^*$) with a real coefficient for the second harmonic of the rectified current ($i_n$) and a setpoint ($x_9^*$) with an imaginary coefficient for the second harmonic of the rectified current ($i_n$) are determined.

7. Method according to Claim 5 or 6, wherein, when said state variables are determined, coefficients ($x_i$) of a decomposition of said state variables into a Fourier series are determined.

8. Method according to any one of Claims 5 to 7, wherein the charging device (34) is modelled by an averaging model for averaging the state variables with respect to the angular frequency ($\omega_r$) of the fundamental of the voltage ($V_R$) of the network (4).

9. Method according to any one of Claims 5 to 8, wherein, when at least one of said determined state variables is controlled, a command ($a_1$) with a real coefficient for the first harmonic of a duty cycle ($\alpha$) of the voltage buck stage (18), a command ($a_2$) with an imaginary coefficient for the first harmonic of the duty cycle ($\alpha$) of the voltage buck stage (18), a command ($b_0$) with a constant-term coefficient for a duty cycle ($\beta$) of the voltage boost stage (26), a command ($b_1$) with a real coefficient for the second harmonic of the duty cycle ($\beta$) of the voltage boost stage (26) and a command ($b_2$) with an imaginary coefficient for the second harmonic of the duty cycle ($\beta$) of the voltage boost stage (26) are determined.

10. Method according to any one of Claims 5 to 9, wherein, when at least one of said determined state variables is controlled, an error ($s_k$) associated with said state variable is calculated, an exponentially stable behaviour of said error is imposed of the form:

$$\dot{s}_k = -m_k.s_k - l_k.sign(s_k)$$

where $s_k$ denotes said error,

$m_k$ denotes a first control parameter, and
$l_k$ denotes a second control parameter.

11. Method according to any one of Claims 5 to 10, wherein it is determined whether there is a phase difference between a voltage ($v_R$) of the network (4) and a current ($i_R$) of the network (4), then, if there is a phase difference between the voltage of the network and the current of the network, it is determined whether there is a need to compensate for said phase difference, and wherein, if there is a phase difference between the voltage of the network and the current of the network and if there is a need to compensate for said phase difference, said setpoint value ($x_i^*$) is modified so that the charging device (34) generates a reactive power compensating at least partially for said phase difference.

# FIG.1
## ART ANTERIEUR

EP 3 695 503 B1

FIG.2

EP 3 695 503 B1

# FIG.3

| | |
|---|---|
| <u>38</u> | <u>39</u> |
| <u>40</u> | <u>44</u> |

# FIG.4

```
┌─────────────┐
│     P1      │
└──────┬──────┘
       │
       ▼
┌─────────────┐
│     P2      │
└──────┬──────┘
       │
       ▼
┌─────────────────┐
│  ┌───────────┐  │
│  │    E01    │  │
│  └─────┬─────┘  │◄── P3
│        ▼        │
│  ┌───────────┐  │
│  │    E02    │  │
│  └───────────┘  │
└─────────────────┘
       │
       ▼
┌─────────────────┐
│  ┌───────────┐  │
│  │    E03    │  │
│  └─────┬─────┘  │◄── P4
│        ▼        │
│  ┌───────────┐  │
│  │    E04    │  │
│  └───────────┘  │
└─────────────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   WO 2012140374 A

**Littérature non-brevet citée dans la description**

*   **SANDERS S. R. ; NOWOROLSKI J. M. ; LIU X. Z. ; VERGHESE G. C.** Generalized averaging method for power conversion circuits. *IEEE 21st Annual Conférence on Power Electronics Specialists,* 1990

*   Standard IEC, 61000-3-2, Limits for harmonic current émissions. *International Electromechanical Commission,* 2004